(19)

Europäisches Patentamt
European Patent Office
Office européen des brevets

(11) **EP 3 567 542 A1**

(12) **EUROPEAN PATENT APPLICATION**
published in accordance with Art. 153(4) EPC

(43) Date of publication:
**13.11.2019 Bulletin 2019/46**

(21) Application number: **18754126.3**

(22) Date of filing: **12.02.2018**

(51) Int Cl.:
**G06Q 40/08** (2012.01)

(86) International application number:
**PCT/CN2018/076514**

(87) International publication number:
**WO 2018/149386 (23.08.2018 Gazette 2018/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **20.02.2017 CN 201710089854**

(71) Applicant: **Alibaba Group Holding Limited Grand Cayman (KY)**

(72) Inventors:
• **ZHANG, Tianyi**
  **Zhejiang 311121 (CN)**
• **LONG, Man**
  **Zhejiang 311121 (CN)**

(74) Representative: **Branderhorst, Matthijs Pieter Arie Marks & Clerk LLP**
  **Fletcher House**
  **Heatley Road**
  **The Oxford Science Park**
  **Oxford OX4 4GE (GB)**

(54) **RISK MANAGEMENT AND CONTROL METHOD AND DEVICE**

(57) Embodiments of the present application provide a risk management and control method, comprising: receiving an object event to be managed and controlled; determining a candidate verification mode set according to the object event; determining output weights for at least some candidate verification modes in the candidate verification mode set; and determining a verification mode for risk management and control on the object event from the candidate verification mode set according to the output weights corresponding to the verification modes. According to the present application, quantification by weights is performed on different verification modes during a management and control decision process to prevent over-reliance on subjective understanding in the past decision process. By using existing data during the quantification process, multiple factors are taken into quantitative consideration for management and control decision, such as risk adaptability, equipment availability, user preference, scenario adaptability, etc. Meanwhile, simultaneous consideration of multiple transaction indicators in a quantitative mode can, for example, reduce financial loss caused by an illegal user who evades the management and control, and can reduce interference to normal users, thereby improving user experience and reducing costs for identity authentication computation.

101 Identify an event

102 Determine applicable management and control modes and available management and control modes

103 Determine a personalized output verification set

104 Determine an event attribute weight

105 Perform quantitative ranking on the verification mode set according to the event attribute weights and management and control attribute weights

106 Output verification modes according to the quantitative ranking

FIG. 1

EP 3 567 542 A1

**Description**

**Technical Field**

The present application relates to the field of Internet information processing technologies and computer technologies, and in particular, to a risk management and control method and device.

**Background**

Risk management and control is an important component of payment security management and comprises determining what management and control action (i.e., management and control decision) needs to be taken for a risky transaction event. The management and control action includes, but is not limited to, direct pass, performing a variety of verification on the transaction event, such as text message verification, face verification, etc.

The management and control decision is a security valve for risk control of a payment action, and it is also a direct contact point for customer experience. The soundness of a management and control decision will directly impact risk control results and user experience. An ideal management and control decision may include the following two aspects: on one hand, as many as possible direct passes should be outputted for safe transaction events, and on the other hand, as many as possible verification modes that are difficult to be bypassed should be outputted for risky transaction events. These two aspects impact the user experience and quality of risk control of the management and control decision, respectively.

Conventional management and control decision may be divided into two types: first, rule-based or rule tree-based modes of management and control decision, i.e., some rules of management and control decision are provided first based on the understanding of a transaction. The rules include, but are not limited to, elements such as transaction amount, transaction scenario, risk magnitude, etc., then a particular transaction event is compared with the rules or the rule tree, and a corresponding management and control mode is outputted if a definition in a particular rule or the rule tree is satisfied. For example, if the transaction event is a low risk, small amount, offline transaction for a ride-hailing service, the corresponding management and control action in the rule tree may be outputting text message for verification. Second, the first mode is combined with user survey or the like to adjust the rules according to survey results. Since the survey results may comprise, to a certain extent, personalized contents of a particular type of users, this mode may improve customer experience.

The above two modes of management and control decision have the following defects: first, the rule-based management and control decision method heavily relies on the understanding of transactions by a rule developer, while such understanding is inevitably prone to errors. Moreover, this rule-based method does not consider dynamic changes to the transactions, and the rules may not be timely adjusted accordingly. That will lead to false positive or false negative. False negative will directly affect the management and control results and transaction security, while false positive will affect customer experience. Second, the survey-based management and control decision has a defect of high survey costs, and the survey sample size may not be big enough to avoid selection bias. Thus, there is room for improvement for the risk management and control results and customer experience.

**Summary**

The present application provides a risk management and control method and device for solving the problem that conventional management and control decision overly relies on subjective understanding. Furthermore, the present application can also solve the problem in the conventional technologies that transaction security and user experience cannot be taken care of at the same time. The present application takes into account a plurality of transaction criteria at the same time for management and control decision. For example, this application may minimize financial loss caused by an illegal device that evades the management and control, minimize interference to legitimate users, and minimize the cost of identity verification. In other words, the problem to be solved by the present application is how to produce the most appropriate management and control mode with optimized criteria such as transaction security, user experience, etc.

Embodiments of the present application provide a risk management and control method, comprising:

receiving an object event to be managed and controlled;
determining a candidate verification mode set according to the object event;
determining output weights for at least some candidate verification modes in the candidate verification mode set; and
determining a verification mode for risk management and control on the object event from the candidate verification mode set according to the output weights corresponding to the candidate verification modes.

The embodiments of the present application further provide a risk management and control device, comprising:

a receiving module configured to receive an object event to be managed and controlled;
a processing module configured to determine a candidate verification mode set and determine output weights for at least some candidate verification modes in the candidate verification mode set; and
an outputting module configured to output a verification mode for risk management and control on the object event from the candidate verification mode set according to the output weights corresponding to the candidate verification modes.

The embodiments of the present application further provide a transaction management and control method, which uses the risk management and control method according to the present application.

The embodiments of the present application further provide a transaction management and control device, which uses the risk management and control device according to the present application.

At least one of the above technical solutions used by the embodiments of the present application can achieve the following advantageous effects.

In the embodiments of the present application, different verification modes during a management and control decision process are quantified and weighted to prevent over-reliance on subjective understanding in the past decision making process. By using existing data during the quantification process, multiple factors, such as risk adaptability, equipment availability, user preference, scenario adaptability, etc., may be taken into quantitative consideration for management and control decision. Meanwhile, simultaneous consideration of multiple transaction indicators in a quantitative mode can, for example, reduce financial loss caused by an illegal user who evades the management and control, and can reduce interference to legitimate users, thereby improving user experience and reducing costs for identity authentication computation.

At the same time, the present application is based on data, which can minimize the reliance on the understanding of transactions by a rule developer. Since the process is quantified, existing data may be utilized to the largest degree possible. The solutions of the present application are easy to be adjusted and expanded. Different variations for new transaction scenarios, new identity authentication modes, etc. may all be easily incorporated into the quantification concept of the present application.

**Brief Description of the Drawings**

The accompanying drawings to be described in the specification are used to provide a further understanding of the present application and constitute a part of the present application. The exemplary embodiments of the present application and description of the exemplary embodiments are used to explain the present application, and do not constitute improper limitations to the present application. In the accompanying drawings:

FIG. 1 is a flow chart of a risk management and control method according to some embodiments of the present application;
FIG. 2 is a flow chart of a payment risk management and control method according to some embodiments of the present application;
FIG. 3 is a schematic structural diagram of a risk management and control device according to some embodiments of the present application;
FIG. 4 is a schematic structural diagram of a payment risk management and control device according to some embodiments of the present application.

**Detailed Description**

To achieve the objectives of the present application, the embodiments of the present application provide a risk management and control method.

To enable one of ordinary skill in the art to better understand the technical solutions of the present application, the technical solutions in the embodiments of the present application will be clearly and completely described below with reference to the accompanying drawings in the embodiments of the present application. It is obvious that the described embodiments are merely some, but not all, embodiments of the present application. Based on the embodiments of the present application, all other embodiments obtainable by one of ordinary skill in the art without creative effort shall fall within the scope of the present application.

In the embodiments of the present application, the risk management and control includes any process for performing decision-making determination according to a risk event itself or selecting any management and control action for the risk event. There may exist two or more optional management and control actions. There are a plurality of the risk events, such as security check, account log-in, identity authentication for online transactions and payments, etc. in different scenarios. It should be understood that for each of the above-described events, there may exist a plurality of optional management and control modes. In other words, any event involving risk and management and control decision may probably become an object event in the embodiments of the present application. These events are not limited in the specification.

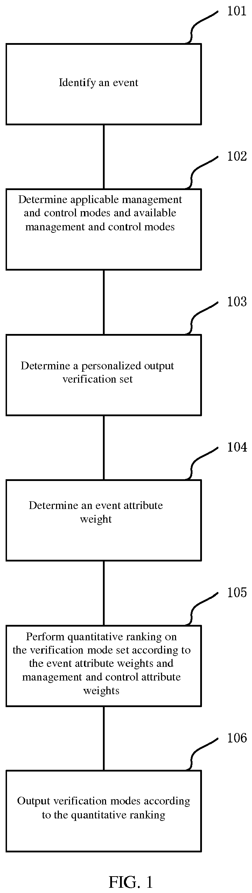

As shown in FIG. 1, in Step 101, a user initiates an event, i.e., an object event. When a risk management and control system receives the event, the risk management and control system performs identification on the event. Contents to be identified may include, but are not limited to, device information, risk type information, etc. It should be understood that the contents to be identified are determined according to parameters required by subsequent risk control. In an embodiment of the present application, the contents to be identified are factors particularly considered in quantification. These factors to be considered will be listed in examples below and will not be elaborated here.

In Step 102, a candidate verification mode set is determined according to an identification result in Step 101. The candidate verification mode set may be a set of all possible verification modes or a partial set of all possible verification modes. Preferably, in the case where a partial set of all possible verification modes is selected, some improper verification modes may be eliminated according to the identification result. Reasons for eliminating some improper verification modes may include a risk type factor and a device factor.

Furthermore, the determining the candidate verification mode set may include the following: identifying a risk type associated with the object event, determining a first verification mode set associated with the risk type according to the risk type, identifying a device type of the device that initiates and/or processes the object event, and determining a second verification mode set associated with the device type according to the device type; performing an intersection process on the first verification mode set and the second verification mode set, and setting the candidate verification mode set as a result of the intersection process.

Preferably, in Step 102, applicable management and control modes (i.e., the first verification mode set) and available management and control modes (i.e., the second verification mode set) for the event may be determined according to the information identified in Step 101. The applicable management and control modes refer to a management and control mode set determined by considering impacts of the risk type of the event on management and control modes. The available management and control modes refer to management and control modes determined by considering the device type of the device that initiates and/or processes the object event in the event. For example, a verification mode set is determined after considering whether hardware or software in the device supports corresponding verification modes. The device that initiates the object event refers to a device of a party that brings up or starts the event, and the device that processes the object event refers to a device of a party whose processing of the received event is required before the event can be completed. The reason why the device that initiates and/or processes the object event needs to be considered is because the object to be verified may change in actual situations.

One of ordinary skill in the art should understand that the determining applicable management and control modes and available management and control modes for the event in Step 102 is for determining a candidate verification mode set for the event, and the determination method in this step is not the only method. For example, one of ordinary skill in the art may omit the applicable management and control modes, and only use the available management and control modes as the candidate verification mode set.

Preferably, in Step 103, the two management and control mode sets determined in Step 102 (i.e., the applicable management and control modes and the available management and control modes) may go through an intersection screening to select management and control modes comprised in both sets as a candidate verification mode set for the object event. Management and control mode sets that are simultaneously in the applicable management and control modes and the available management and control modes may be selected as the candidate verification mode set.

In Step 104, an event attribute weight of a to-be-quantified element is determined according to the identified event. The to-be-quantified element is a factor that needs to be considered at time of decision making. Different factors need to be considered during the quantification processes for different application scenarios. In general, these factors include, but are not limited to, user type corresponding to the object event, scenario type corresponding to the object event, and user preference corresponding to the object event. Correspondingly, a user type weight may be determined according to the user type, a scenario type weight may be determined according to the scenario type, and a preference weight may be determined according to the preference. In general, elements used as to-be-considered elements are the factors that are included in considerations for management and control decision. The event attribute weight of each factor represents the factor's importance in the entire risk management and control. The event attribute weight is typically determined after all factors are considered. The determined event attribute weight is the same for all management and control modes and will not change for different verification modes. The event attribute weight reflects, in general, the importance of each to-be-considered element and reflects relative importance of the to-be-considered elements. In other words, a to-be-considered element having a higher event attribute weight indicates a higher impact of this element on management and control decision.

In Step 105, the candidate verification mode set determined in Step 103 is subject to quantitative ranking. In Step 105, a management and control attribute weight vector is first obtained for each candidate verification mode. The management and control attribute weight vector is formed by management and control attribute weights of all to-be-quantified elements. N to-be-quantified elements correspond to N management and control attribute weights. That is, the management and control attribute weight vector has N dimensions or elements. After the management and control attribute weight vector of the candidate verification mode is obtained, the vector is multiplied by a vector formed by event attribute weights of the to-be-quantified elements to obtain an output weight for each verification mode. While the event attribute weights reflect attributes of an event, the management and control attribute weight reflects more of a comparison among various management and control modes, i.e., the attributes of management and control modes. A higher management and control attribute weight indicates that the management and control mode pays more attention to the quantified element corresponding to the management and control attribute weight.

Preferably, the management and control attribute weight vector is a vector that is preestimated according to historical big data. For example, the management and control attribute weight vector may be obtained using the genetic algorithm or other optimization algorithms. For example, after historical big data or some samples in the historical big data are obtained, the actual values of some criteria may be counted. Provided that some criterion threshold values or constraints are given (e.g., a percent at which a verification mode is determined, etc.), a target criterion (i.e., a preset criterion, such as a pass rate) may be optimized to obtain the management and control attribute weight. For example, an optimizing process of obtaining the management and control attribute weight vector may be expressed as follows:

$$\text{Min Index1, Given Index2} < 0.02\% \qquad\qquad (\text{Formula 1})$$

Where Index 1 means a target criterion and Index2 means a constraint criterion. In other words, the meaning of the above optimizing process is that, provided that the given constraint criterion (Index2) is less than 0.02%, the above-described management and control attribute weight is optimized by minimizing the target criterion (Index 1), and the management and control attribute weight vector for the verification mode may be obtained.

By using an algorithm similar to the above to estimate historical big data, a management and control attribute weight vector may be obtained for each verification mode. For example,

$$W_i = (w_{i1}, w_{i2}, w_{i3}\ldots) \qquad\qquad (\text{Formula 2})$$

Where $w_{i1}$, $w_{i2}$, $w_{i3}$... are management and control attribute weights for the 1st, 2nd, 3rd, ... event attribute weights, respectively. Therefore, for each verification mode, the weight in the verification mode can be calculated through the quantification vector corresponding to the verification mode. For the $i^{th}$ verification mode, the output weight (or output score) is:

$$\text{Score(i)} = w_{i1}*K_1 + w_{i2}*K_2 + w_{i3}*K_3 + 3w \qquad\qquad (\text{Formula 3})$$

$K_1$, $K_2$, $K_3$ ... in Formula 3 represent an event attribute weight of each to-be-quantified factor, respectively.

Assuming that there is a total of three determined candidate verification modes for an object event, the weight of each candidate verification mode is then calculated using the above-described method to obtain Score(1), Score(2), and Score(3), and Score(1), Score(2), and Score(3) are compared or ranked. The verification mode having the highest weight is selected as the verification mode that is finally outputted.

In the process of quantitative ranking, since the quantification parameters have taken into account historical big data, the present application can minimize the reliance on the understanding of transactions by a rule developer. At the same time, in the process of determining the quantification parameters of the present application, main transaction constraints may be inputted as parameters, and then the quantification parameters are adjusted according to different transaction demands.

In Step 106, the final management and control decision (i.e., output of the management and control action or verification mode) is made according to a result of quantitative ranking in Step 105.

Preferably, this method may further comprise testing the management and control attribute weight. During the testing process, historical sample data (i.e., a historical event for testing) is first obtained. The data may comprise the identified event and the verification mode outputted for the event in exemplary management and control. Then, quantification is performed on the historical sample using the management and control attribute weight vector to be tested (the quantification process is the same as what is set forth in Steps 101 to 106) to obtain the testing verification mode. The management and control attribute weight vector to be evaluated can be tested by comparing the evaluated management and control output sample and the exemplary management and control output sample. Furthermore, the management and control attribute weight vector is adjusted according to the testing result, i.e., some or all weights in the management and control attribute weight vector are adjusted. In other words, the importance of each event attribute weight is adjusted.

Preferably, the test comprises, for example, obtaining a testing event for testing from all historical events, i.e., obtaining a particular historical event as a testing target. According to the recorded verification mode that is determined for each testing event, a first quantity of testing events that satisfies a designated condition is determined. The first quantity is the quantity of management and control modes that have actually taken place. The testing verification mode determined for each testing event is determined based on the management and control attribute weight, and according to the testing verification mode, a second quantity of testing events that satisfies the designated condition is determined. The second quantity is the quantity of management and control modes that are determined using the quantification method in the embodiments of the present application. The first quantity and the second quantity are compared, and the management and control attribute weight is adjusted according to a comparison result. During the testing process, by selecting different testing events and determining a designated condition for the testing events, the effectiveness of the management and control attribute weight vector in the present application in the event category to which the testing events belong can be seen, while the effectiveness of the management and control effects are shown by the second quantity.

Meanwhile, based on numerous samples and evaluation processes, the inventors propose to use four testing event samples and corresponding designated conditions as evaluation criteria:

1. The testing events are secure historical events that have passed verification, and the designated condition is that the determined verification mode is direct pass. This criterion shows whether more management and control modes of direct pass can be determined based on the quantification vector for a white sample whose identity has been successfully verified;

2. The testing events are secure historical events that fail to pass verification, and the designated condition is that the determined verification mode is direct pass or a verification mode different from the exemplary verification mode is further determined. This criterion shows whether more management and control modes of direct pass or a verification mode different from the exemplary verification mode can be determined based on the quantification vector for a white sample that has failed an identity verification. The exemplary verification mode refers to an outputted verification mode in the historical event that has already taken place;

3. The testing events are risky historical events that have been directly passed, and the designated condition is that the determined verification mode is a verification mode other than a direct pass. This criterion shows whether a verification mode other than a direct pass can be determined for a black sample that has been identified with risks but is directly passed in the exemplary management and control output;

4. The testing events are risky historical events that have passed verification, and the designated condition is that the determined verification mode is a verification mode different from the exemplary verification mode. This criterion shows whether a management and control mode different from the exemplary verification mode can be determined for a black sample that has passed in the exemplary management and control output.

The evaluation criterion 1 shows, for a white sample, whether a number of successful verification mode outputs can be reduced through the to-be-evaluated quantification vector. Since a white sample is a transaction event with no risk, an ideal result is that direct pass is outputted for all white samples, which is nevertheless difficult to achieve in reality. Therefore, outputting as many direct passes as possible indicates that the quantification vector is able to provide better user experience in transactions with white samples.

The evaluation criterion 2 is similar to the evaluation criterion 1. For a white sample, outputting as many direct passes as possible is a goal to achieve for improving user experience. Meanwhile, for the type of management and control of white samples that have failed identity verification, additional output for identity verification or an output of failed transaction leads to poor user experience. Therefore, it should be understood that, if a management and control mode different from the exemplary verification mode can be outputted through the to-be-evaluated quantification vector to increase the likelihood of successful identity verification, better user experience can be achieved.

The evaluation criterion 3 evaluates the security of a quantification vector. A mode that outputs direct pass for a black sample is undesirable. Therefore, it should be understood that, if the to-be-evaluated quantification vector can output a result other than a direct pass, such as text message verification or face verification, for a black sample identified with risks but having an output of direct pass in exemplary management and control, it shows that the quantification vector can improve the security of management and control.

The evaluation criterion 4 similarly evaluates the security of a quantification vector. A black sample that passes verification in an exemplary output of management and control may occur in a case such as loss of a mobile phone, viruses, or a hacker obtaining some management and control information. The occurrence of this type of events indicates that the originally outputted management and control mode is unable to identify the risk. If a management and control mode different from the original management and control mode can be outputted through the to-be-evaluated quantification vector, it at least improves the possibility of identifying the risk. Take loss of a mobile phone as an example, if the original management and control decision outputs text message verification, it is obvious that financial loss cannot be prevented. However, if a management and control mode generated through the quantification vector is face verification or failed transaction, this loss may be prevented, and the security is improved as well.

In addition, as an application scenario to which the technical solutions in the embodiments of the present application are applicable, the object event may be a transaction payment event, in particular a transaction event that uses a device for payment. The transaction event may be, for example, a process that a merchant initiates a payment and a user completes the payment.

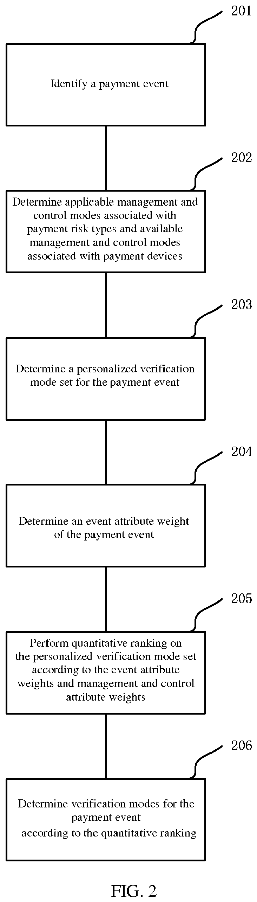

As shown in FIG. 2, in Step 201, a user initiates an event, such as a transaction activity, and a risk control system typically will identify the even upon receiving the event. Contents to be identified may include, but are not limited to, device information, risk type information, etc. It should be understood that the contents to be identified are determined according to parameters required by subsequent risk control. In an embodiment of the present application, the contents to be identified are factors particularly considered in quantification. These factors to be considered will be listed in examples below and will not be elaborated here.

For example, the step of determining the candidate verification mode set may include:

identifying a risk type corresponding to the transaction payment event, determining a first verification mode set associated with the risk type according to the risk type (e.g., transaction limit, online/offline, risk magnitude, etc.), identifying a device type of the device (e.g., a mobile phone) that initiates and/or processes the transaction payment event, and determining a second verification mode set associated with the device type according to the device type; performing an intersection process on the first verification mode set and the second verification mode set, and using a result of the intersection process as the candidate verification mode set.

In one example, in Step 202, applicable management and control modes (i.e., the first verification mode set) and available management and control modes (i.e., the second verification mode set) for the event are determined according to the identification result in Step 201. The candidate verification mode set may be a set of all possible verification modes or a partial set of all possible verification modes. Preferably, in the case where a partial set of all possible verification modes is selected, some improper verification modes may be eliminated according to the identification result (e.g., if the mobile phone used by the user who completes the payment does not have hardware or software for fingerprint verification, then the fingerprint verification mode is improper for the user). Reasons for eliminating some improper verification modes may include a risk type factor and a device factor.

Preferably, in Step 202, the applicable management and control modes and the available management and control modes for the event are determined according to the information identified in Step 201. The applicable management and control modes refer to a management and control mode set determined by considering impacts of the risk type of the event on management and control modes. For example, if the event is identified that there exists a risk that a transaction being associated with a lost mobile phone, and then it should be understood that the applicable management and control mode set should not comprise a text message verification mode. The available management and control modes refer to a verification mode set determined by considering whether the corresponding verification modes are supported by hardware or software of the managed and controlled object in the event. For example, if the mobile phone applicable in the event does not have a component that supports fingerprint verification, then it should be understood that the available management and control set should exclude the fingerprint verification mode. In determining the applicable management and control modes and the available management and control modes, the transaction security may be improved to a certain extent since the impact of the risk type on management and control modes is considered, so that financial losses caused by transactions using lost or stolen mobile phone may be avoided to a certain extent. On the other hand, by checking whether hardware and software support an identity verification mode, an unsupported verification mode will not be outputted, which may also improve user experience to a certain extent.

Preferably, in Step 203, the two management and control mode sets determined in Step 202 (i.e., the applicable management and control modes and the available management and control modes) may go through an intersection process to select management and control modes comprised in both sets as a candidate verification mode set for the object event. For example, in a scenario, all possible management and control modes may comprise: 0. Direct pass, 1. Text message verification, 2. Knowledge-Based Authentication (KBA), 3. Face verification, 4. Fingerprint verification, 5. Output failed transaction, and 6. Output failed transaction and freeze account balance. In Step 202, the applicable management and control modes determined according to risk type may comprise: 0. Direct pass, 1. Text message verification, 3. Face verification, and 5. Output failed transaction. In Step 202, the available management and control modes determined according to factors such as device and software in the event may comprise: 0. Direct pass, 1. Text message verification, 2. Knowledge-Based Authentication (KBA), and 5. Output failed transaction. In Step 203, the above-described two management and control mode sets may go through an intersection process to determine an output verification set, which may be 0. Direct pass, 1. Text message verification, and 5. Output failed transaction. The determined output verification set is used as a candidate set for decision making, and the output verification set reflects comprehensive considerations of transaction security and user experience.

In Step 204, a weight of a to-be-quantified element, i.e., an event attribute weight, is determined according to the identified event. The element is a factor that needs to be considered for decision making, while the event attribute weight of each factor represents the factor's importance in the entire risk management and control. The event attribute weight is typically determined after all factors are considered. The determined event attribute weight is the same for all management and control modes and will not change for different verification modes. These factors include, but are not limited to, user type corresponding to the object event, scenario type corresponding to the object event, and user preference corresponding to the object event. Correspondingly, a user type weight is determined according to the user type, a scenario type weight is determined according to the scenario type, and a preference weight is determined according to the preference. In general, elements used as to-be-considered elements are the factors that are included in considerations for management and control decision. Take user types of the to-be-verified users in an event as an example, the user types may be pre-classified, according to experience or historical data, into students, young people, mid-aged people, old people, other people with disabilities, etc., and a user applicable weight (or user applicable score) associated with each user type may be assigned to users of each type. Similarly, scenario types in the event may also be classified into offline payment and online payment, and a scenario applicable weight (or scenario applicable score) may be assigned to scenarios of each type. Similarly, user preference may also be classified into preference for text message verification, preference for fingerprint verification, preference for face verification, etc., and a user preference weight (or user preference score) may be assigned to scenarios of each type. It should be understood that the above-described classifications of user type, scenario type and user preference are not the only classifications. In fact, the classifications may be determined by comprehensively considering various aspects such as experience, historical data, calculation cost, etc. For example, in the scenario types, various transaction types, such as ride-hailing, shopping, food and beverage service, may be further considered for offline payment, while online payment may also be further divided into online shopping, payments for credit cards, etc. For each classification of each to-be-quantified element, the weight may be preset as:

Table 1

| User type | Students | Young people | Mid-aged people | Old people | Other people with disabilities |
|---|---|---|---|---|---|
| User type weight | $X_1$ | $X_2$ | $X_3$ | $X_4$ | $x_5$ |

Table 2

| Scenario type | Offline payment | Online payment |
|---|---|---|
| Scenario type weight | $Y_1$ | $Y_2$ |

Table 3

| User preference | Text message verification | Fingerprint verification | Face verification |
|---|---|---|---|
| User preference weight | $Z_1$ | $Z_2$ | $Z_3$ |

In Step 205, the candidate verification mode set determined in Step 203 is subject to quantitative ranking. In Step 205, a management and control attribute weight vector is first obtained for each candidate verification mode. The management and control attribute weight vector is formed by management and control attribute weights of all to-be-quantified elements. N to-be-quantified elements may correspond to N management and control attribute weights. After the management and control attribute weight vector of the candidate verification mode is obtained, the vector is multiplied by a vector formed by event attribute weights of the to-be-quantified elements.

Preferably, the management and control attribute weight vector is a vector that is preestimated according to historical big data. For example, the management and control attribute weight vector may be obtained using the genetic algorithm or other optimization algorithms. For example, after historical big data or some samples in the historical big data are obtained, the actual values of some criteria (e.g., an amount of financial loss) are counted. Provided that some criterion threshold values or constraints are given (e.g., a percent at which a verification mode is sent, etc.), a target criterion (such as pass rate, amount of financial loss, etc.) may be optimized. For example, an optimizing process of obtaining the management and control attribute weight vector may be expressed as follows:

$$\text{Min Cost1, Given Index2}<0.03\% \qquad \text{(Formula 4)}$$

Where Cost1 means a target criterion and Index2 means a constraint criterion. For example, Cost1 means a total amount of financial loss of a transaction set, and Index2 means a percent of outputting a text message verification mode in all management and control modes. In other words, the meaning of the above optimizing process is that, provided that the percent of outputting a text message verification mode in all management and control modes is less than 0.03%, the above-described management and control attribute weight is optimized with minimizing the total amount of financial loss of the transaction set as a goal. Thus the management and control attribute weight vector for the text message verification mode may be obtained.

By using an algorithm similar to what is described above to estimate historical big data, a management and control attribute weight vector may be obtained for each verification mode. For example, a quantification vector in a quantification process having three event attribute weights is:

$$W_i = (w_{i1}, w_{i2}, w_{i3}) \qquad \text{(Formula 5)}$$

Where $w_{i1}$, $w_{i2}$, $w_{i3}$ are management and control attribute weights for the 1st, 2nd, and 3rd event attribute weights, respectively. Therefore, for each management and control mode, the weight outputted by the management and control mode can be calculated through the quantification vector corresponding to the management and control mode. For the $i^{th}$ verification mode, the output weight (or output score) is:

$$\text{Score(i)} = w_{i1}*K_1 + w_{i2}*K_2 + w_{i3}*K_3 \qquad \text{(Formula 6)}$$

$K_1$, $K_2$, and $K_3$ in Formula 6 represent an event attribute weight of each to-be-quantified factor, respectively. The values of the event attribute weights are shown in Tables 1 to 3.

In the case of a transaction event of "old people make offline payments for ride-hailing fees," the output verification set determined in Step 203 is: 0. Direct pass, 1. Text message verification, and 5. Output a weight of to-be-quantified element of failed transaction. Management and control attribute weight vectors $W_0$, $W_1$, and $W_5$ are obtained, respectively. The management and control attribute weight vectors are $(w_{01}, w_{02}, w_{03})$, $(w_{11}, w_{12}, w_{13})$, and $(w_{51}, w_{52}, w_{53})$, respectively. The vector formed by event attribute weights of the to-be-quantified elements is $(X_4, Y_1, Z_1)$. Then, the output weight or output score is calculated according to Formula 6 for each verification mode. Take the text message verification mode as an example:

$$\text{Score(1)} = w_{11}*X_4 + w_{12}*Y_1 + w_{13}*Z_1 \qquad \text{(Formula 7)}$$

Similarly, weights of the other two candidate verification modes are calculated to obtain Score(0) and Score(5). Then, Score(0), Score(1), and Score(5) are compared or ranked, and the one having the highest weight is selected as the verification mode that is finally outputted.

In the process of quantitative ranking, since the quantification parameters have fully considered historical big data, in particular personalized demands in the historical big data, the present application can minimize the reliance on the understanding of transactions by a rule developer. At the same time, in the process of determining the quantification parameters of the present application, main transaction constraints may be inputted as parameters, and then the quantification parameters are adjusted according to different transaction demands.

In Step 206, the final management and control decision is fed back to the risk control system according to a result of quantitative ranking in Step 205, i.e., what management and control action or verification mode is outputted.

Preferably, this method further comprises evaluating the management and control attribute weight before determining the management and control attribute weight. The evaluating process is similar to the first embodiment of the present application with the difference being that the historical event is a transaction payment event, the verification mode is a verification mode applicable on transaction payment events, and the associated designated condition is a desired condition in transaction payment.

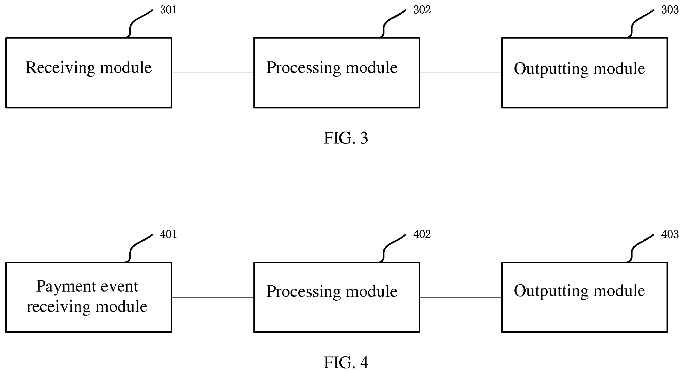

As shown in FIG. 3, the present application further provides a risk management and control device, comprising: a receiving module 301 for receiving an object event to be managed and controlled; a processing module 302 for determining an output verification mode set, determining at least one event attribute weight according to the object event, obtaining at least one preset management and control attribute weight, and determining output weights for at least some candidate verification modes in the candidate verification mode set according to the event attribute weight and the at least one preset management and control attribute weight; and an outputting module 303 configured to output a verification mode for the object event according to the output weights corresponding to the candidate verification modes.

Preferably, the processing module is further configured to identify a risk type corresponding to the object event, and determine a first verification mode set associated with the risk type according to the risk type; identify a device type of the device that initiates and/or processes the object event, and determine a second verification mode set associated with the device type according to the device type; perform an intersection process on the first verification mode set and the second verification mode set, and use a result of the intersection process as the candidate verification mode set.

Preferably, the processing module is further configured to determine a weight associated with user type for the object event, determine a weight associated with scenario for the object event, and determine a weight associated with user preference for the object event.

Preferably, the processing module is further configured to obtain at least one of the management and control attribute weights determined according to management and control historical records associated with the candidate verification modes.

Preferably, the obtaining at least one of the management and control attribute weights determined according to management and control historical records associated with the candidate verification modes comprises: determining an event attribute weight of each historical event; and determining the management and control attribute weights according to preset criteria and constraints in a manner of optimizing the criteria based on the constraints and event attribute weights.

Preferably, the processing module is further configured to use an equation $S_i = \sum_{j=1}^{n} w_{ij} \cdot K_j$ to determine an output weight Si of the $i^{th}$ verification mode, where $w_{ij}$ is the $j^{th}$ management and control attribute weight, $K_j$ is the $j^{th}$ event attribute weight, and n represents a total number of event attribute weights.

Preferably, the processing module is further configured to:

obtain testing events for testing from historical events;
according to the recorded verification mode that is determined for each testing event, determine a first quantity of testing events that meet a designated condition;
determine the testing verification mode determined for each testing event based on the management and control attribute weight;
according to the testing verification mode, determine a second quantity of testing events that meet the designated condition; and
compare the first quantity and the second quantity, and adjust the management and control attribute weight according to a comparison result.

As shown in FIG. 4, the present application further provides a device for risk management and control of transaction payment events, which is different from the embodiment shown in FIG. 3 in that the historical event is a transaction payment event, the verification mode is a verification mode applicable on transaction payment events, and the associated designated condition is a desired condition in transaction payment.

The present application further discloses a transaction management and control method, which uses the risk management and control method according to the present application.

The present application further discloses a transaction management and control device, which comprises the risk management and control device according to the present application.

In the 1990s, an improvement to a technology can be obviously categorized into a hardware improvement (e.g., an improvement to a circuit structure, such as a diode, a transistor, a switch, etc.) or a software improvement (an improvement to a flow of a method). With the technological development, however, many current improvements to method flows may be deemed as direct improvements to hardware circuit structures. Designers almost always obtain a corresponding hardware circuit structure by programming an improved method flow into a hardware circuit. Therefore, it cannot be concluded that an improvement to a method flow cannot be realized with a hardware module. For example, Programmable Logic Device (PLD) (e.g., Field Programmable Gate Array (FPGA)) is such integrated circuit that the integrated circuit's logic functions are determined by a user through programming the device. A designer programs on his/her own to "integrate" a digital system onto one piece of PLD, who does not need to ask a chip manufacturer to design and manufacture a dedicated IC chip. At present, moreover, this type of programming has mostly been implemented through "logic compiler" software, rather than manually manufacturing the IC chips. The logic compiler software is similar to a software compiler used for program development and writing, while a particular programming language must be used for writing source codes prior to compiling, which is referred to as a Hardware Description Language (HDL). There is not just one, but many types of HDL, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. The most commonly used right now includes VHDL (Very-High-Speed Integrated Circuit Hardware Description Language) and Verilog. One of ordinary skill in the art should also be aware that it would be very easy to obtain a hardware circuit to implement a logic method flow by using the above HDLs to carry out a little bit logic programming on the method flow and program the method flow into an IC.

A controller may be implemented in any proper manner. For example, a controller may be in, for example, a form of a microprocessor or processor, as well as a computer readable medium that stores computer readable program codes (e.g., software or firmware) capable of being executed by the (micro)processor, a logic gate, a switch, an Application Specific Integrated Circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller may further be implemented as a part of a control logic of a memory. One of ordinary skill in the art should also be aware that, in addition to that a controller is implemented in a manner of pure computer readable program codes, it is totally feasible to perform logic programming on steps of a method to enable a controller to implement the same functions in a form of a logic gate, a switch, an ASIC, a programmable logic controller, and an embedded microcontroller. Therefore, such controller may be deemed as a hardware part, while devices comprised in the controller and configured to achieve various functions may also be deemed as a structure inside the hardware part. Alternatively, devices configured to achieve various functions may even be deemed as both software modules to implement a method and a structure inside a hardware part.

The system, apparatus, module, or unit described in the above embodiments may be implemented by a computer chip or entity, or implemented by a product having a function. A typical implementation device is a computer. In one example, a computer may be, for example, a personal computer, a laptop computer, a cellular phone, a camera phone, a smart phone, a personal digital assistant, a medium player, a navigation device, an email device, a game console, a tablet computer, a wearable device, or a combination of any devices in these devices.

For convenience of description, the above device is divided into various units according to functions for description. Functions of the units may be implemented in one or more pieces of software and/or hardware when the present application is implemented.

One of ordinary skill in the art should understand that the embodiments of the present invention may be provided as a method, a system, or a computer program product. Therefore, the present invention may be implemented as a complete hardware embodiment, a complete software embodiment, or an embodiment combing software and hardware. Moreover, the present invention may be in the form of a computer program product implemented on one or more computer usable storage media (including, but not limited to, a magnetic disk memory, CD-ROM, an optical memory, etc.) comprising computer usable program codes.

The present invention is described with reference to flowcharts and/or block diagrams of the method, device (system), and computer program product according to the embodiments of the present invention. It should be understood that a computer program instruction may be used to implement each process and/or block in the flowcharts and/or block diagrams and a combination of processes and/or blocks in the flowcharts and/or block diagrams. These computer program instructions may be provided for a general-purpose computer, a special-purpose computer, an embedded processor, or a processor of other programmable data processing devices to generate a machine, causing the instructions executed by a computer or a processor of other programmable data processing devices to generate an apparatus for implementing a function specified in one or more processes in the flowcharts and/or in one or more blocks in the block diagrams.

These computer program instructions may also be stored in a computer readable memory that can instruct a computer or other programmable data processing devices to work in a particular manner, causing the instructions stored in the computer readable memory to generate a manufactured article that includes an instruction apparatus. The instruction apparatus implements a function specified in one or more processes in the flowcharts and/or in one or more blocks in the block diagrams.

These computer program instructions may also be loaded onto a computer or other programmable data processing devices, causing a series of operational steps to be performed on the computer or other programmable devices, thereby generating computer-implemented processing. Therefore, the instructions executed on the computer or other programmable devices provide steps for implementing a function specified in one or more processes in the flowcharts and/or in one or more blocks in the block diagrams.

In a typical configuration, the computation device includes one or more processors (CPUs), input/output interfaces, network interfaces, and a memory.

The memory may include computer readable media, such as a volatile memory, a Random Access Memory (RAM), and/or a non-volatile memory, e.g., a Read-Only Memory (ROM) or a flash RAM. The memory is an example of a computer readable medium.

Computer readable media include permanent, volatile, mobile, and immobile media, which can implement information storage through any method or technology. The information may be computer readable instructions, data structures, program modules, or other data. Examples of storage media of computers include, but are not limited to, Phase-change Random Access Memories (PRAMs), Static Random Access Memories (SRAMs), Dynamic Random Access Memories (DRAMs), other types of Random Access Memories (RAMs), Read-Only Memories (ROMs), Electrically Erasable Programmable Read-Only Memories (EEPROMs), flash memories or other memory technologies, Compact Disk Read-Only Memories (CD-ROMs), Digital Versatile Discs (DVDs) or other optical memories, cassettes, cassette and disk memories or other magnetic memory devices, or any other non-transmission media, which can be used for storing information accessible to a computation device. According to the definitions in the specification, the computer readable media do not include transitory media, such as modulated data signals and carriers.

It should be further noted that the terms of "including," "comprising," or any other variants of the terms are intended to encompass a non-exclusive inclusion, causing a process, method, commodity, or device comprising a series of elements to not only comprise these elements, but also comprise other elements that are not clearly listed, or further comprise elements that are inherent to the process, method, commodity, or device. When there is no further restriction, elements defined by the statement "comprising one..." does not exclude that a process, method, commodity, or device comprising the above elements further comprises additional identical elements.

One of ordinary skill in the art should understand that the embodiments of the present application may be provided as a method, a system, or a computer program product. Therefore, the present application may be implemented as a complete hardware embodiment, a complete software embodiment, or an embodiment combing software and hardware. Moreover, the present application may be in the form of a computer program product implemented on one or more computer usable storage media (including, but not limited to, a magnetic disk memory, CD-ROM, an optical memory, etc.) comprising computer usable program codes.

The present application may be described in a regular context of a computer executable instruction that is executed by a computer, such as a program module. In general, the program module comprises a routine, a program, an object, a component, a data structure, etc. for executing a particular task or implementing a particular abstract data type. The present application may also be practiced in distributed computing environments. In these distributed computing environments, remote processing devices connected via communication networks carry out tasks. In the distributed computing environments, a program module may be located in local and remote computer storage media, including storage devices.

The embodiments in this specification are described in a progressive manner with each embodiment focused on differences from other embodiments, and the embodiments may be mutually referenced for identical or similar parts. In particular, the system embodiment is described in a relatively simple manner, as the system embodiment is substantially similar to the method embodiment. The description of the method embodiment may be referenced for the related parts.

The above-described is only embodiments of the present application, which are not used to limit the present application. To one of ordinary skill in the art, the present application may have various modifications and changes. Any modification, equivalent substitution, or improvement made within the spirit and principle of the present application shall be encompassed by the claims of the present application.

**Claims**

1. A risk management and control method, comprising:

   receiving an object event to be managed and controlled;
   determining a candidate verification mode set according to the object event;
   determining output weights for at least some candidate verification modes in the candidate verification mode set; and
   determining a verification mode for risk management and control on the object event from the candidate verification mode set according to the output weights corresponding to the candidate verification modes.

2. The risk management and control method according to claim 1, wherein the determining output weights for at least some candidate verification modes in the candidate verification mode set comprises:

   determining at least one event attribute weight according to the object event; and
   determining the output weights for at least some candidate verification modes in the candidate verification mode set according to the event attribute weight and the at least one preset management and control attribute weight.

3. The risk management and control method according to claim 1, wherein the determining a candidate verification mode set comprises:

identifying a risk type corresponding to the object event, and determining a first verification mode set associated with the risk type according to the risk type;

identifying a device type of a device that initiates and/or processes the object event, and determining a second verification mode set associated with the device type according to the device type; and

performing an intersection process on the first verification mode set and the second verification mode set, and setting the candidate verification mode set as a result of the intersection process.

4. The risk management and control method according to claim 2, wherein the determining at least one event attribute weight according to the object event at least comprises one of the following:

identifying a user type corresponding to the object event, and determining a user type weight according to the user type;

identifying a scenario type corresponding to the object event, and determining a scenario type weight according to the scenario type; and

identifying a user preference corresponding to the object event, and determining a preference weight according to the user preference.

5. The risk management and control method according to claim 2, wherein the determining at least one preset management and control attribute weight comprises:
presetting at least one management and control attribute weight according to a recorded verification mode determined for each historical event.

6. The risk management and control method according to claim 5, wherein the presetting at least one management and control attribute weight according to a recorded verification mode determined for each historical event comprises:

determining an event attribute weight of each historical event; and

according to preset criteria and constrains, determining the at least one preset management and control attribute weight by optimizing the criteria based on the constraints and the event attribute weights.

7. The risk management and control method according to any one of claims 1, 2, 5, and 6, wherein the determining output weights for at least some candidate verification modes in the candidate verification mode set comprises:

using an equation $S_i = \sum_{j=1}^{n} w_{ij} \cdot K_j$ to determine an output weight Si of the $i^{th}$ verification mode,

where $w_{ij}$ is the $j^{th}$ management and control attribute weight, $K_j$ is the $j^{th}$ event attribute weight, and n represents a total number of event attribute weights.

8. The risk management and control method according to claim 6, further comprising:

obtaining testing events for testing from historical events;

according to a recorded verification mode for each testing event, determining a first quantity of the testing events that satisfies a designated condition;

determining a testing verification mode for each testing event based on the management and control attribute weight;

according to the testing verification mode, determining a second quantity of the testing events that satisfies the designated condition; and

comparing the first quantity and the second quantity, and adjusting the management and control attribute weight according to a comparison result.

9. The risk management and control method according to claim 8, wherein the testing events are secure historical events that have passed verification, and the designated condition is that the determined verification mode is direct pass; and/or

the testing events are secure historical events that fail to pass verification, and the designated condition is that the determined verification mode is direct pass or a verification mode different from the verification mode previously used; and/or

the testing events are risky historical events that have been directly passed, and the designated condition is that the determined verification mode is a verification mode other than a direct pass; and/or
the testing events are risky historical events that have passed verification, and the designated condition is that the determined verification mode is a verification mode different from the verification mode previously used.

10. A risk management and control device, comprising:

a receiving module configured to receive an object event to be managed and controlled;
a processing module configured to determine a candidate verification mode set and determine output weights for at least some candidate verification modes in the candidate verification mode set; and
an outputting module configured to output a verification mode for risk management and control on the object event from the candidate verification mode set according to the output weights corresponding to the candidate verification modes.

11. The risk management and control device according to claim 10, wherein the processing module is further configured to:

determine at least one event attribute weight according to the object event;
obtain at least one preset management and control attribute weight; and
determine the output weights for at least some candidate verification modes in the candidate verification mode set according to the event attribute weight and the at least one preset management and control attribute weight.

12. The risk management and control device according to claim 10, wherein the processing module is further configured to:

identify a risk type corresponding to the object event, and determine a first verification mode set associated with the risk type according to the risk type;
identify a device type of a device that initiates and/or processes the object event, and determine a second verification mode set associated with the device type according to the device type; and
perform an intersection process on the first verification mode set and the second verification mode set, and set the candidate verification mode set as a result of the intersection process.

13. The risk management and control device according to claim 11, wherein the processing module is further configured to:

identify a user type corresponding to the object event, and determine a user type weight according to the user type;
identify a scenario type corresponding to the object event, and determine a scenario type weight according to the scenario type; and
identify a user preference in the object event, and determine a preference weight according to the user preference.

14. The risk management and control device according to claim 11, wherein the processing module is further configured to:
preset at least one management and control attribute weight according to a recorded verification mode determined for each historical event.

15. The risk management and control device according to claim 14, wherein to preset at least one management and control attribute weight according to a recorded verification mode determined for each historical event, the processing module is further configured to:

determine an event attribute weight of each historical event; and
according to preset criteria and constrains, determine the at least one preset management and control attribute weight by optimizing the criteria based on the constraints and the event attribute weights.

16. The risk management and control device according to any one of claims 10, 11, 14, and 15, wherein the processing module is further configured to:

use an equation $S_i = \sum\limits_{j=1}^{n} w_{ij} \cdot K_j$ to determine an output weight Si of the i$^{th}$ verification mode,

where $w_{ij}$ is the j$^{th}$ management and control attribute weight, $K_j$ is the j$^{th}$ event attribute weight, and n represents a total number of event attribute weights.

17. The risk management and control device according to claim 15, wherein the processing module is further configured to:

obtain testing events for testing from historical events;
according to a recorded verification mode for each testing event, determine a first quantity of the testing events that satisfies a designated condition;
determine a testing verification mode for each testing event based on the management and control attribute weight;
according to the testing verification mode, determine a second quantity of the testing events that satisfies the designated condition; and
adjust the management and control attribute weight according to a comparison result of the first quantity and the second quantity.

18. The risk management and control device according to claim 17, wherein the processing module is further configured so that:

the testing events are secure historical events that have passed verification, and the designated condition is that the determined verification mode is direct pass; and/or
the testing events are secure historical events that fail to pass verification, and the designated condition is that the determined verification mode is direct pass or a verification mode different from the verification mode previously used; and/or
the testing events are risky historical events that have been directly passed, and the designated condition is that the determined verification mode is a verification mode other than a direct pass; and/or
the testing events are risky historical events that have passed verification, and the designated condition is that the determined verification mode is a verification mode different from the verification mode previously used.

19. A transaction management and control method, comprising the risk management and control method according to any one of claims 1-9.

20. A transaction management and control device, comprising the risk management and control device according to any one of claims 10-18.

101

Identify an event

102

Determine applicable management
and control modes and available
management and control modes

103

Determine a personalized output
verification set

104

Determine an event attribute
weight

105

Perform quantitative ranking on
the verification mode set according to
the event attribute weights and
management and control attribute
weights

106

Output verification modes according
to the quantitative ranking

FIG. 1

201

Identify a payment event

202

Determine applicable management and control modes associated with payment risk types and available management and control modes associated with payment devices

203

Determine a personalized verification mode set for the payment event

204

Determine an event attribute weight of the payment event

205

Perform quantitative ranking on the personalized verification mode set according to the event attribute weights and management and control attribute weights

206

Determine verification modes for the payment event according to the quantitative ranking

FIG. 2

| Receiving module | | Processing module | | Outputting module |
|---|---|---|---|---|
| 301 | | 302 | | 303 |

FIG. 3

| Payment event receiving module | | Processing module | | Outputting module |
|---|---|---|---|---|
| 401 | | 402 | | 403 |

FIG. 4

# INTERNATIONAL SEARCH REPORT

| International application No. |
|---|
| PCT/CN2018/076514 |

### A. CLASSIFICATION OF SUBJECT MATTER

G06Q 40/08 (2012.01) i

According to International Patent Classification (IPC) or to both national classification and IPC

### B. FIELDS SEARCHED

Minimum documentation searched (classification system followed by classification symbols)

H04L; H04W; H04Q; G06Q

Documentation searched other than minimum documentation to the extent that such documents are included in the fields searched

Electronic data base consulted during the international search (name of data base and, where practicable, search terms used)

CNKI, CNPAT, WPI, EPODOC: 选择, 确定, 管控, 控制, 过滤, 风险, 决策, 策略, 规则, 方式, 动作, 集, 对象, 权重, 权值, 权, 校验, select, determine, control, policy, strategy, rule, action, object, event, weight, verify, group

### C. DOCUMENTS CONSIDERED TO BE RELEVANT

| Category* | Citation of document, with indication, where appropriate, of the relevant passages | Relevant to claim No. |
|---|---|---|
| Y | CN 104202738 A (HUAWEI TECHNOLOGIES CO., LTD.) 10 December 2014 (10.12.2014), description, paragraphs [0055]-[0064] and [0104]-[0135] | 1-20 |
| Y | CN 105323248 A (MIANYANG NORMAL UNIVERSITY) 10 February 2016 (10.02.2016), description, paragraphs [0006]-[0054] | 1-20 |
| A | WO 2013191857 A1 (MOTOROLA MOBILITY LLC.) 27 December 2013 (27.12.2013), entire document | 1-20 |
| A | CN 101504745 A (ALIBABA GROUP HOLDING LTD.) 12 August 2009 (12.08.2009), entire document | 1-20 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 04 April 2018 | 04 May 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Xiaoli<br><br>Telephone No. (86-10) 53961772 |

Form PCT/ISA /210 (second sheet) (July 2009)

## INTERNATIONAL SEARCH REPORT
Information on patent family members

International application No.

PCT/CN2018/076514

| Patent Documents referred in the Report | Publication Date | Patent Family | Publication Date |
|---|---|---|---|
| CN 104202738 A | 10 December 2014 | WO 2016029698 A1 | 03 March 2016 |
| CN 105323248 A | 10 February 2016 | None | |
| WO 2013191857 A1 | 27 December 2013 | EP 2865157 A1 | 29 April 2015 |
| | | CN 104487969 A | 01 April 2015 |
| | | CN 104823423 A | 05 August 2015 |
| | | WO 2013191855 A1 | 27 December 2013 |
| | | WO 2013191856 A1 | 27 December 2013 |
| | | US 2013347057 A1 | 26 December 2013 |
| | | US 2013346414 A1 | 26 December 2013 |
| CN 101504745 A | 12 August 2009 | None | |

Form PCT/ISA /210 (patent family annex) (July 2009)